# EUROPEAN PATENT APPLICATION

(11) **EP 0 634 198 A1**
(43) Date of publication of application: **18.01.1995**
(21) Application number: 93201997.9
(22) Date of filing: 08.07.1993
(51) Int. Cl.: B01D 5/00, B01D 3/10, C02F 1/04, G03C 11/00

(54) **Installation for controlling the underpressure in an evaporator apparatus**

(71) Applicant: AGFA-GEVAERT naamloze vennootschap, B-2640 Mortsel (BE)
(72) Inventor: De Niel, Marc, B-2640 Mortsel (BE); Verlinden, Bart, B-2640 Mortsel (BE); Claes, Jan, B-2640 Mortsel (BE); Visintin, Dionisio, I-33170 Pordenone (IT)

(57) **Abstract**

Installation (11) for controlling the underpressure in an evaporator apparatus for treating a waste solution, and for condensing the evaporated vapour, which comprises :
- a liquid jet hydraulic ejector (45), the suction side of which is connected to the evaporator apparatus (22),
- a tank (47) for collecting the ejector liquid and the vapour or already partly condensed vapour from the evaporator apparatus,
- a pump (53) for pumping liquid from said tank to said hydraulic ejector, and
- a temperature-controlling means for controlling the temperature of the liquid fed to said hydraulic ejector.

## Description

### Field of the invention.

The present invention relates to an installation for controlling the underpressure in an evaporator apparatus for treating a waste solution and for condensing vapours, and more in particular to an installation suitable for use in treating waste solutions discharged as a result of the processing of a photographic light-sensitive material.

Normally, in a photographic treatment of a photographic light-sensitive silver halide material, a monochrome light-sensitive material (black-and-white photosensitive material) is fixed, and water-washed, whereas a colour light-sensitive material (colour photosensitive material) is colour-developed, bleach-fixed (or bleached and fixed), water-washed, and stabilised.

In the photographic processing of a large quantity of light-sensitive materials, any component which has been consumed in a photographic processing is replenished. A component which has eluted as a result of the photographic processing or a component which has condensed as a result of evaporation (for example, bromide salts which exist in a developer and silver complex salts which exist in a fixing solution) is removed to keep the rate of each component of the processing solution to be constant, whereby the performance of the processing solution does not vary. In this photographic processing, a replenisher is supplied with the processing solution and part of the processing solution is wasted to remove the concentrated component.

In recent years, the amount of processing solution as well as of water is strongly reduced in carrying out photographic processing in order to avoid environmental pollution and to photographically develop at low cost.

In automatic developing machines, waste solution of a photographic processing is fed from a treating tank to a waste solution pipe where the waste solution is diluted with a coolant provided with the automatic developing machine, and then, wasted in sewerages.

According to ordinances recently put into force, it is permitted to waste water and coolants used for photographic processing to sewerages and rivers. However, it is not permitted to discharge photographic waste solutions such as a developer, fixing solution, colour developer, bleach-fix solution (or bleaching solution and fixing solution), and stabilising agent to sewerages and rivers.

An apparatus which facilitates the treatment of a photographic waste solution is disclosed in US-A-4,940,134, and includes a waste solution reservoir which is maintained at a constant level. A drum, partially immersed in the waste solution, is rotated to coat its surface. The drum is heated to produce waste vapour. The waste vapour is condensed by a condenser and filtered, and solid wastes are scraped from the surface of the drum. The condenser has a drain tank for collecting condensate and a non-condensable gas component. The interior of the drain tank is sealed to form an airtight seal and has a vent for exhausting the non-condensable gas component to the outside. The air vent includes an absorption tower to treat the non-condensable gas component.

A disadvantage of this apparatus is that the installation for producing the underpressure in the waste solution reservoir is not suited for maintaining an accurate underpressure in said waste solution reservoir as a consequence of the use of a common fan for evacuating the reservoir, and of the carrying back to the reservoir of heated non-condensed components. In other words, the installation for producing the required underpressure does not operate truely autonomously because it forms a closed circuit in combination with the housing comprising the waste solution reservoir. Insufficient underpressure requires an increased temperature of the drum in order to properly evaporate waste solution applied to the drum, whereas too strong an underpressure causes evaporation of waste solution already in the waste solution reservoir, whereby sludge formed at that place may jeopardize the satisfactory operation of the apparatus in the long run.

### SUMMARY OF THE INVENTION

### Objects of the invention.

It is an object of the present invention to provide an installation for controlling the underpressure in an evaporator apparatus for treating a waste solution and for condensing the evaporated vapour.

It is a further object of the invention to provide suchlike installation which operates autonomously, more in particular which has only a suction conduct in connection with the evaporator apparatus.

It is a still further object of the invention to provide an improved installation which allows the temperature of the waste solution fed to an evaporation drum to be lower than 50° C so that undesired decomposition of waste components, e.g. silver salts, is avoided.

### Statement of the invention.

In accordance with the present invention, an installation for controlling the underpressure in an evaporator apparatus for treating a waste solution, and for condensing the evaporated vapour, comprises mounted in a closed circuit a liquid jet hydraulic ejector, the suction side of which is connected to the evaporator apparatus, a tank for collecting the ejector liquid and the condensed vapour from the evaporator apparatus, a pump for pumping liquid from said tank to said hydraulic ejector, and temperature controlling means for controlling the temperature of the liquid fed to said hydraulic ejector.

Since temperature and pressure are closely related with each other, the temperature control of the liquid fed to the hydraulic ejector produces a well determined underpressure at the suction side of the ejector, and thus in the evaporator apparatus.

Suitable embodiments of the inventive installation are as follows.

The temperature controlling means comprises a radiator through which the liquid fed to the ejector is passed, a fan for cooling said radiator, and a temperature sensor in the outlet circuit of said radiator for controlling the operation of said fan.

The tank for collecting the ejector liquid is provided with overflow means for draining excess liquid from said tank. Said overflow may conduct to a second tank for storage of said liquid.

The tank for collecting the ejector liquid has baffle means causing a resistance in the liquid flow through the tank to ensure that no air bubbles would reach the pump for pumping liquid to said hydraulic ejector.

The temperature of the liquid fed to the hydraulic ejector is such that an underpressure of at least 850 mbar is obtained in the evaporator apparatus. This produces evaporation at temperatures at which no decomposition of undesired components occurs, i.e. temperatures not notably higher than 50 °C.

The invention will be described hereinafter by way of example with reference to its application in photography, but it will be understood that the apparatus according to the invention finds its application as well in the fields of galvanic plants, glazier plants, emulsifying oil treatments, solvent treatments, tanning activities, etc., in which waste solutions are highly polluting and allow the recovery of raw materials.

### BRIEF DESCRIPTION OF THE DRAWINGS

Fig. 1 is a diagrammatic view of one embodiment of an installation according to the invention for the recovery of raw material from a waste solution,
Fig. 2 is a view in detail of the heat evaporator of the installation of Fig. 1,
Fig. 3 is a front view according to arrow 3 of Fig. 4,
Fig. 4 is a plan view,
Fig. 5 is a section on line 5-5 of Fig. 4, and
Fig. 6 is a section on line 6-6 of Fig. 4 of one embodiment of a waste liquid applicator for the heat evaporator according to Fig. 2.

### Detailed description of the invention.

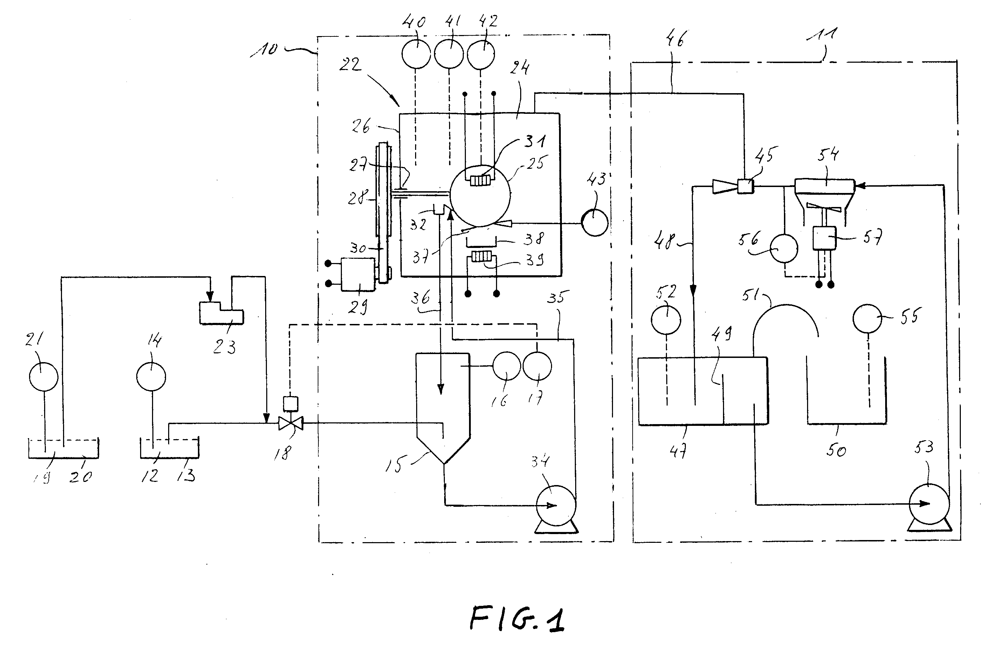

Fig. 1 shows a schematic drawing of one embodiment of the present invention, wherein rectangle 10 in dot-and-dash lines is the evaporation section and rectangle 11 is the condensing section.

Waste solution 12 in a waste solution tank 13 wherein the liquid level is controlled by a level sensor 14 flows to a buffer tank 15 because of the vacuum when valve 18 is open. Buffer tank 15 can comprise a sensor 16 signalling the maximum level in the tank, and a sensor 17 controlling electromagnetic valve 18 to maintain a minimum level in the tank.

Antifoam solution 19 in tank 20 has its level controlled by sensor 21. A peristaltic pump 23 adds this solution to the waste solution before it flows into the buffer tank in order to keep foam formation under control.

Heat evaporator 22 consists of an airtight housing 24 wherein a drum 25 is mounted for rotation about a horizontal axis. The housing is suitably made from stainless steel provided with a protective coating at the innerside, or from a composite material.

Drum 25 has a cylindrical mantle, which in the present embodiment is made of glass. However, other suitable materials that resist corrosion such as stainless steel, ceramic compositions and the like, can be used as well.

One shaft end of drum 25 may extend via a vacuum-tight sealing 27 through a lateral wall 26 of housing 24, as shown diagrammatically, and have a pulley 28 driven by a motor 29 with inbuilt reduction gear, via a timing belt 30. However, both end journals of the shaft of drum 25 can also be located inside housing 24, which facilitates the construction, as well as both pulleys and belt 30, so that only the output shaft of motor 29 must vacuum-tightly pass through wall 26.

Inside drum 25 an electrical IR heater 31 is provided.

Heat evaporator 22 comprises further a waste solution applicator 32 for coating a layer of waste solution on the surface of heated drum 25. Waste solution is fed by pump 34 and via inlet conduit 35 to applicator 32, whereas excess solution flows back via outlet conduit 36 to buffer tank 15 and so to pump 34.

A scraper 37 consisting of a metal or plastic blade is resiliently urged against the peripheral surface of drum 25 and preferably has means (not shown) for adjusting the pressure exerted on the cylinder surface. Removed sludge, i.e. residual solid components resulting from evaporation of liquid on the drum is collected in a receptacle 38. Heater 39 heats said receptacle in order to obtain a dry sludge.

The following sensors are mounted in housing 24.

Sensor 40 for measuring the air pressure, sensor 41 for measuring the air temperature inside the housing, sensor 42 for measuring the surface temperature of drum 25 and sensor 43 for sensing whether the coated layer of waste solution has dried sufficiently.

The condensing section 11 comprises the following elements.

A liquid jet hydraulic ejector 45 for collecting vapour from evaporator 10 via conduit 46 and for generating vacuum in said evaporator. A first tank 47 in which the ejecting liquid and the condensed vapour are received via conduit 48. A baffle 49 in the tank forms a flow restrictor to ensure that no air bubbles would reach pump 53. A second, open tank 50, in which surplus liquid of tank 47 received via overflow 51 is stored, and which can be sent to a processor or to a storage holder, as the case may be, under control of a sensor 55.

Sensor 52 senses the minimum level in tank 47 and stops the operation of the apparatus if not enough liquid is present.

Pump 53, e.g. a centrifugal-type pump, draws liquid from tank 47, and pumps it through heat exchanger 54 to hydraulic ejector 45.

A temperature sensor 56 controls fan 57 so that at the outlet of the heat exchanger a desired temperature is maintained. The degree of vacuum in evaporator 22 is bound to the temperature of the ejector liquid.

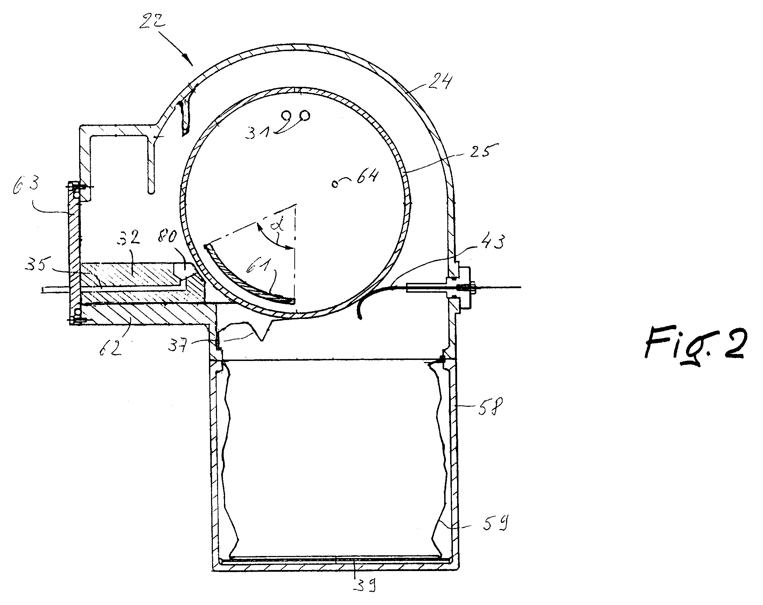

Fig. 2 shows a detailed view of evaporator 22 which forms the subject of our co-pending EP application entitled : "Evaporator apparatus", filed on even day herewith.

Housing 24 comprises two parts, the lower part 58 being removable and vacuum-tightly connected with the upper part 24 and forming receptacle 38 for the collection of removed sludge. Part 58 preferably contains a bag, as indicated by numeral 59 for the collection of the removed sludge, which is in a powdery state. Heater 39 can have the form of a serpentine-like curved electrical heater located at the bottom of part 58 and producing a moderate heating of the bag thereby to obtain a dry sludge.

Heater 31 is a U-shaped electrical heating element. A stationary IR reflector 61 consists of a polished plate curved concentrically with drum 25 and extending over an angle α, approximately from the point where sludge is removed from the drum by scraper 37 up to slightly beyond waste solution applicator 32. A sensor 66 senses the temperature inside the drum.

Waste solution applicator 32 is mounted on a slide, not shown, fitted to base portion 62 of the upper part of housing 24, and is spring-biased so that in operation it is urged with a controlled force against the peripheral surface of the drum. The applicator has an inlet connection 35 and an outlet connection 36 (not shown in this figure) which vacuum-tightly pass through a removable panel 63 giving access to the inner side of the apparatus.

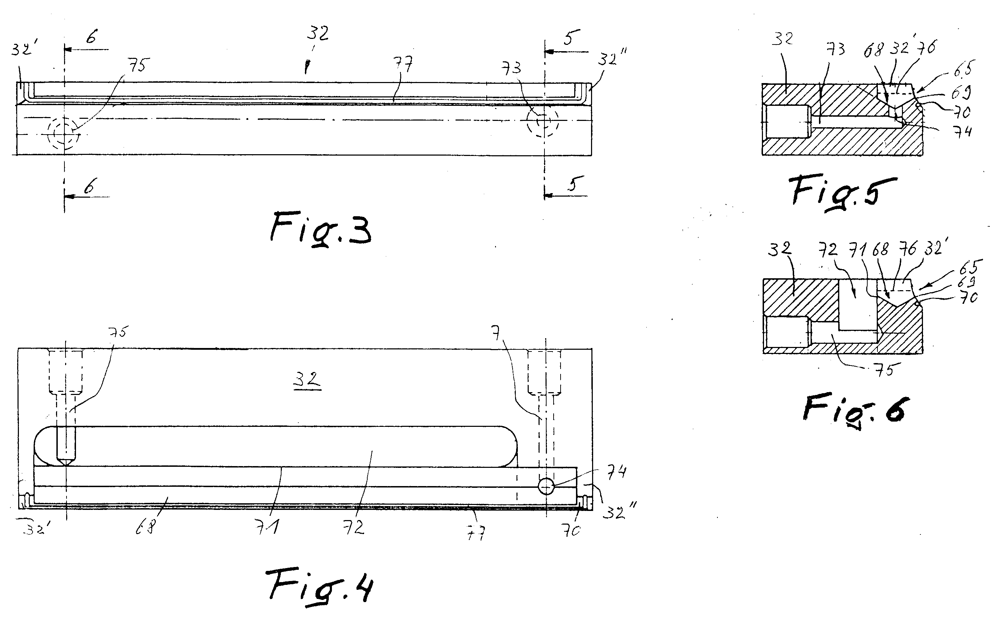

Figs. 3 to 6 illustrate waste solution applicator 32 in detail. In the present example, the applicator has been made by the appropriate machining of a solid block of phenolic resin.

The applicator has a generally rectangular shape. Its front end has an upper portion 65 curved concentrically with respect to the peripheral surface of drum 25. The applicator has a first gutter 68 with a front edge 69 forming the upper edge of lip 70, and a rear edge 71 running parallel to the front edge and forming an overflow at approximately the same height. The first gutter is via said overflow edge 71 in communication with a lower located second gutter 72. Waste solution is fed to the applicator through inlet bore 73 communicating via a bore 74 with the first gutter, whereas the amount of waste solution that has not become applied to drum 25 overflows via edge 71 into the second gutter 72 and leaves the applicator via a bore 75 leading to conduit 36, see Fig. 1. Finally, curved front surface 65 of the applicator is provided with a groove into which fits a sealing strip 77 that slightly protrudes out of the front surface and resiliently bears against drum 25 in operation of the apparatus.

The lateral ends of gutter 68 are closed by wall portions 32' and 32'' being in fact portions of block 32 that remain after gutter 68 has been machined in said block.

In operation of the apparatus, waste liquid is pumped to the applicator at a rate such that a body of liquid is maintained in gutter 68 at a level 76 which is slightly, i.e. in practice between 1 and 3 mm higher than a level determined by the overflow edge 71. It should be recalled that edge 69 is not an overflow edge, since the front opening of gutter 68 is in fact closed by the peripheral surface of the drum which liquid-tightly fits against concave portion 65 of the applicator through sealing strip 75.

Rotating drum 25 becomes coated with a thin layer of waste solution so that the amount of waste solution leaving the applicator via outlet 36 is less than the amount fed via inlet 35. The described operation of the evaporator was started only after the required conditions of temperature and underpressure had been obtained.

The underpressure required for operation of evaporator 22 is obtained in section 11. Tank 47 being filled with water, pump 53 is operated to pump water through hydraulic ejector 45 whereby the air pressure in conduit 46 becomes smaller than atmospheric pressure. Pump 53 maintains a circulation of water so that the vapour pressure gradually lowers. At the same time there is a slight heating of the circulating liquid by energy taken up from the pump.

Waste solution is coated by applicator 32 on drum 25 at a temperature well below the boiling temperature of the solution at atmospheric pressure.

Since the pressure in evaporator 22 is well below atmospheric pressure, and since the surface temperature of drum 25 is well above the boiling temperature of said solution at said reduced pressure, water rapidly evaporates from the layer of waste solution on the drum surface so that sludge remaining on the drum is suited for removal at the moment the position of sensor is reached. The sludge can be completely dry at that moment but it can also take a more or less liquid form depending on the composition of the sludge, the number of r.p.m. of the drum, etc. Sludge is removed from the drum by scraper 37 and falls in bag 59.

The surface of drum 25 is no longer heated as it has passed scraper 37 until it reaches a position beyond the applicator 32, indicated by the angle α. The advantage is that the temperature of the drum surface is not unduely increased whereby problems with premature evaporation of waste solution in the applicator are avoided.

Vapour generated by evaporator 22 is extracted via conduit 46 and condensed in conduit 48. Condensation of the vapour produces heat, which increases the temperature of the water circulated by pump 53. Therefore, as sensor 56 senses too high a temperature, cooling fan 57 is actuated so that radiator 54 cools the circulating water until the correct temperature at the inlet of ejector 45 is obtained.

The following example illustrates the described apparatus and its operation.
- Drum 25 :: diameter 21,5 cm
length 48 cm
- Speed :: adjustable between 1 and 10 rpm
- IR heaters 31 :: 1,3 kW
- Heater 39 :: 0,3 kW
- Applicator 32 :: rate of input through conduit 35 : 6 to 100 l/h
rate of outlet through conduit 36 : 5 to 99 l/h
- Temperature measured by sensor 66 :: 120 °C.
- Shield angle α :: 50 angular degrees
- Temperature of water leaving pump 53 :: 42 °C
- Temperature of water entering hydraulic ejector 45 :: 40 °C
- Underpressure produced by ejector 45 :: 880 mbar
- Temperature in housing 24 :: 50 °C
- Angular extent of lip 76 :: 5 degrees
The present invention is not limited to the described embodiment.

The movable surface means in the evaporator need not necessarily be a drum, but may as well be an endless belt pulled over two or more guide rollers determining the path of the belt.

The waste liquid applicator may have another configuration than the one described hereinbefore. We refer to our co-pending application already referred to wherein another type of applicator is described.

The waste liquid applicator may have another configuration than the one described hereinbefore. We refer to our co-pending application already mentioned wherein another embodiment of an applicator has been described.

## Claims

1. Installation (11) for controlling the underpressure in an evaporator apparatus for treating a waste solution, and for condensing the evaporated vapour, which comprises mounted in a closed circuit :
- a liquid jet hydraulic ejector (45), the suction side of which is connected to the evaporator apparatus (22),
- a tank (47) for collecting the ejector liquid and the condensed vapour from the evaporator apparatus,
- a pump (53) for pumping liquid from said tank to said hydraulic ejector, and
- temperature-controlling means for controlling the temperature of the liquid fed to said hydraulic ejector.

2. Installation according to claim 1, wherein said temperature-controlling means comprises a radiator (54) through which the liquid fed to the ejector is passed, a fan (57) for cooling said radiator, and a temperature sensor (56) in the outlet circuit of said radiator for controlling the operation of said fan.

3. Installation according to claim 1 or 2, wherein said tank (47) for collecting the ejector liquid is provided with overflow means (51) for draining excess liquid from said tank.

4. Installation according to claim 3, which comprises a second tank (50) to which excess liquid is fed.

5. Installation according to claim 3 or 4, wherein said tank (47) for collecting the ejector liquid has baffle means (49) causing a resistance in the liquid flow to ensure that no air bubbles would reach the pump (53).
